# EUROPÄISCHE PATENTSCHRIFT

(11) **EP 0 483 533 B1**
(45) Veröffentlichungstag und Bekanntmachung des Hinweises auf die Patenterteilung: **27.07.1994**
(21) Anmeldenummer: 91116729.4
(22) Anmeldetag: 01.10.1991
(51) Int. Cl.: B60J 1/14

(54) **Fahrzeugkabine, insbesondere für Industrieschlepper**
Vehicle cabin, particularly for an industrial tractor unit
Cabine de véhicule, en particulier pour un tracteur industriel

(30) Priorität: 31.10.1990 US 607009
(43) Veröffentlichungstag der Anmeldung: 06.05.1992
(73) Patentinhaber: DEERE & COMPANY, Moline, Illinois 61265 (US)
(72) Erfinder: Larkin, John Joseph, Dubuque, Iowa 52001 (US); Tindall, Gary Warren, Hazel Green, Wisconsin 53811 (US)
(74) Vertreter: Feldmann, Bernhard

(56) Entgegenhaltungen:
- US-A- 717 278
- US-A- 2 087 777

## Beschreibung

Die Erfindung bezieht sich auf eine Fahrzeugkabine, insbesondere für Industrieschlepper, mit einem eine Fensteröffnung umgebenden Fensterrahmen und einem oberen und einem unteren vertikal zueinander ausgerichteten Schwenkzapfen, auf denen ein vorderes und ein rückwärtiges Fensterteil aufnehmende Scharnierelemente derart schwenkbar angeordnet sind, daß der vordere Fensterteil aus seiner geschlossenen Stellung nach rückwärts und der rückwärtige Fensterteil aus seiner geschlossenen Stellung nach vorwärts gegen den jeweils sich in seiner geschlossenen Stellung befindlichen anderen Fensterteil klappbar sind (siehe US-A- 2 087 777).

Derartige Industrieschlepper werden in der Bauwirtschaft eingesetzt und können frontseitig mit einer Ladeschaufel und rückwärtig mit einem Tieflöffel ausgerüstet sein. Der Bedienungsstand ist rückwärtig am Fahrzeug vorgesehen und weist einen Sitz auf, der um 180° gedreht werden kann, nach vorne gerichtet ist, wenn das Fahrzeug fährt oder wenn mit der Ladeschaufel gearbeitet wird, und der nach rückwärts gerichtet ist, wenn mit dem Tieflöffel gearbeitet wird. Um der Bedienungsperson ein komfortablen und auch sicheren Arbeitsplatz zur Verfügung stellen zu können, wird eine Fahrzeugkabine angeboten, die einen Überrollschutz aufweist und der Bedienungsperson eine Rundumsicht gewährt, die nur beeinträchtigt wird durch die notwendigen Pfosten zum Tragen des Kabinendaches und zum Anschlagen der Kabinentür. Für eine gute Ventilation während des Einsatzes wird dadurch gesorgt, daß bis etwa 50 % der Fensterflächen sich öffnen lassen.

Bei der Fahrzeugkabine, von der die Erfindung ausgeht (John Deere 310C Backhoe-Loader), sind die vorgenannten Bedingungen alle erfüllt. Der Einstieg in die Kabine ist frontseitig, und die Seitenfenster sind aus jeweils mittig angeschlagenen vorderen und rückwärtigen Fensterteilen gebildet, von denen den Erfordernissen der Bedienungsperson entsprechend entweder der vordere Fensterteil durch Verschwenken um 180° nach rückwärts oder der rückwärtige Fensterteil durch Verschwenken um 180° nach vorne geöffnet werden kann. Durch geeignete Verriegelungseinrichtungen werden die Fensterteile in ihrer geöffneten oder geschlossenen Position festgesetzt. Zum Anschlagen der Fensterteile ist jeder seitliche Fensterrahmen mit einem Mittelpfosten versehen, an dessen oberen und unteren Ende Winkelhebel angeschraubt sind, die die oberen und unteren Schwenkzapfen mit den zugehörigen Scharnierelementen aufnehmen. Die Scharnierelemente haben kurze Scharnierleisten, die gegen sich über die ganze Länge der Fensterteile erstrekkende Lochleisten anliegen und mit den Fensterteilen, auf die die Lochleisten aufschraubbar sind, verschraubt sind. Im geschlossenen Zustand der Fensterteile weisen diese einen gegenseitigen Abstand auf, der der Breite des Scharniers entspricht. Dieser Abstand wird durch ein im Bereich der Scharniere ausgespartes und mit beiden Fensterteilen verbundenes Dichttuch überbrückt. Insoweit ist die schwenkbare Anbringung der Fensterteile aufwendig.

Andererseits ist es bei Seitenfenstern für Personenkraftwagen bereits bekannt (US-A-2 087 777), in in den Türen vorgesehene Fensteröffnungen zwei Klappfenster einzusetzen. Hierbei ist jedes Klappfenster in einem das Klappfenster umgebenden Schwingrahmen eingesetzt, die an ihren einander benachbarten vertikalen Rahmenteilen horizontal schwenkbar miteinander verbunden sind. Endteile der vertikalen Rahmenteile sind zu zueinander versetzten Ösen gerollt, die über einen einzigen sich über die Fensterlänge erstreckenden Schwenkzapfen scharnierartig miteinander verbunden sind. Im geschlossenen Zustand der Klappfenster liegen die vertikalen Rahmenteile unmittelbar nebeneinander. Die Schwingrahmen und die diese miteinander verbindende Scharniervorrichtung sind teile- und kostenaufwendig und verbessern das äußere Erscheinungsbild nicht unbedingt. Die Scharnieranordnung verhindert, daß die Klappfenster gegeneinander geklappt werden können. Ein Klappfenster wird im geöffneten Zustand zu dem anderen Fenster immer in einem Winkel abstehen.

Für ein Fahrerfenster bei einem Omnibus ist bereits vorgeschlagen worden (GB-A-717 278), das Fenster zweiteilig und horizontal klappbar und verschiebbar auszubilden. Jeder Fensterteil ist in einem Klapp- und Schieberahmen mit vertikalen einander zugelegenen Rahmenteilen angeordnet. Auf die Rahmenteile ist ein oberes und ein unteres Scharnier mit je einem Schwenkzapfen aufgesetzt, und die Rahmenteile haben im geschlossenen Zustand gegenseitigen Abstand, der dann durch eine Dichtung geschlossen wird. Die Dichtung ist an einem der Rahmenteile aufgesetzt, erstreckt sich über die gesamte Länge der Rahmenteile und wird im geschlossenen Zustand der Fensterteile in eine Auskehlung gedrückt, die an dem anderen Rahmenteil vorgesehen ist. Die Fensterteile schieben sich beim Aufklappen teilweise in das Innere des Fahrzeugs, ein Fensterteil kann nicht unabhängig von dem anderen aufgeklappt werden und die Dichtung kann beim Eindrücken in die Auskehlung und bei ihrem Austreten leicht beschädigt werden.

Die mit der Erfindung zu lösende Aufgabe wird in einer einfacheren und verbesserten Ausbildung und Anordnung der Schwenkverbindung der Fensterteile gesehen. Diese Aufgabe ist nach der Erfindung dadurch gelöst worden, daß die Scharnierelemente mit inneren im wesentlichen vertikal verlaufenden Seiten versehen sind, die zu der Längsachse der Schwenkzapfen versetzt sind und zu dieser parallel verlaufen, daß eine vertikal verlaufende Seite mit einer zusammenpressbaren elastischen Dichtung versehen ist, die im geschlossenen Zustand beider Fensterteile durch die vertikal verlaufende Seite des anderen Scharnierelementes zusammengepresst ist, und daß die Scharnierelemente seitlich offene und sich über ihre gesamte Länge zwischen den oberen und unteren Teilen des Fensterrahmens erstreckende Ausnehmungen aufweisen, in denen die Fensterteile mit ihren innen liegenden vertikal verlaufenden Kanten befestigt sind. Auf diese Weise wurden die bekannten Lochleisten in die Scharnierelemente integriert und so versetzt zu den Schwenkzapfen angeordnet, daß ihre sich im geschlossenen Zustand der Fensterteile gegenüberliegenden Seiten dann einen relativ kleinen Abstand zueinander aufweisen. Dieser Abstand wird im geschlossenen Zustand der Fensterteile durch die einseitig befestigbare Dichtung geschlossen, so daß Staub, Wind, Regen bzw. Wasser oder Geräusche nicht in das Innere der Kabine gelangen können. Ferner werden die innen liegenden Kanten der Fensterteile in die Scharnierelemente eingebettet und durch diese geschützt. Außerdem wird das Erscheinungsbild verbessert.

Auf je einen Mittelpfosten kann in weiterer Ausgestaltung verzichtet werden, wenn die Schwenkzapfen an oberen und unteren Teilen des Fensterrahmens angeordnet sind.

Auch auf das Bohren von Löchern in die Fensterteile kann ferner verzichtet werden, wenn die innen liegenden vertikal verlaufenden Kanten der Fensterteile mit den Ausnehmungen der Scharnierelemente verklebt sind. Zusätzliche Befestigungsmittel sind nicht erforderlich. Für die Aufnahme des Klebstoffes bieten sich unter den Ausnehmungen in die Scharnierelemente eingearbeitete Taschen an.

Die Schwenkzapfen lassen sich besonders einfach anordnen, wenn sich der obere Schwenkzapfen von dem oberen Teil des Fensterrahmens vertikal nach unten und der untere Schwenkzapfen sich von dem unteren Teil des Fensterrahmens vertikal nach oben erstreckt.

Nach einem weiteren Vorschlag der Erfindung kann vorgesehen werden, daß die Dichtung eine Breite aufweist, die der Breite der inneren Seite des einen Scharnierelementes entspricht, mit der sie verbunden ist, und mit zwei vertikal verlaufenden Lippen versehen ist, die im geschlossenen Zustand der beiden Fensterteile gegen die innere Seite des anderen Scharnierelementes anliegen. Die Lippen erlauben ein leichtes Lösen beim Öffnen eines Fensterteils und liegen im geschlossenen Zustand fest gegen den einen Fensterteil bzw. gegen das zugehörige Scharnierelement an. Die Kompressibilität der Dichtung kann noch verbessert werden, wenn die Dichtung entsprechende Öffnungen oder Hohlräume aufweist. Die Breite der Dichtung gestattet eine leichte Befestigung, beispielsweise durch Kleben, an dem Scharnierelement.

Zweckmäßig sollten die im geschlossenen Zustand der beiden Fensterteile sich gegenüberliegenden Seiten der beiden Scharnierelemente einen gegenseitigen Abstand aufweisen, der kleiner ist als die Stärke der Dichtung in ihren unkomprimierten Zustand. Auf diese Weise wird die Dichtung im geschlossenen Zustand der beiden Fensterteile zusammengepresst.

Ein ansprechendes Äußeres wird dadurch erreicht, daß die Scharnierelemente flache Innenseiten aufweisen, die im geschlossenen Zustand der beiden Fensterteile in der gleichen Ebene wie die Innenseiten der Fensterteile liegen. Mögliche Verletzungen durch scharfe Kanten der sich in der Fahrerkabine befindlichen Bedienungsperson werden vermieden.

Dadurch, daß die Schanierelemente im geschlossenen Zustand der beiden Fensterteile eine Gesamtbreite aufweisen, die kleiner ist als die zehnfache Fensterscheibenstärke wird eine sehr schmale Fensterteilbefestigung erzielt, die die Rundumsicht der Bedienungsperson nicht oder nur unwesentlich beeinträchtigt.

In der nachfolgenden Beschreibung ist ein Ausführungsbeispiel der Erfindung dargestellt. Es zeigt:

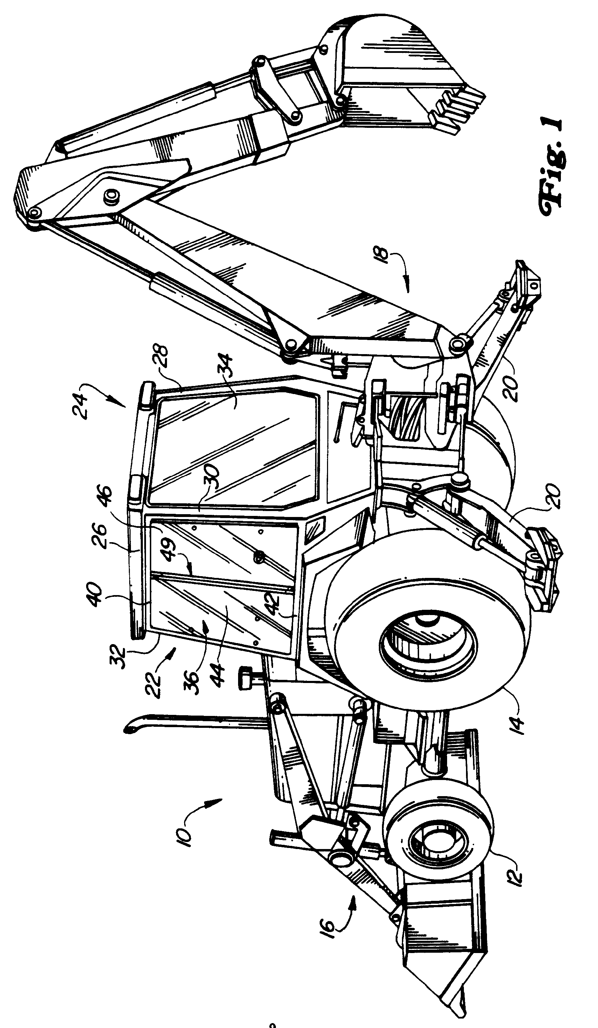

- Fig. 1: einen Industrieschlepper mit Fahrerkabine in perspektivischer Darstellung,
- Fig. 2: ein seitliches Kabinenfenster,
- Fig. 3: das Kabinenfenster von oben gesehen und in einem geschlossenen Zustand, der in ausgezogenen Linien dargestellt ist. Die strichpuntierte Stellung zeigt den rückwärtigen Fensterteil in seiner nach vorne geklappten und geöffneten Stellung,
- Fig. 4: einen Schnitt nach der Linie 4:4 in Fig. 3,
- Fig. 5: eine ähnliche Schnittdarstellung wie in Fig. 4 mit geöffnetem vorderen Fensterteil und
- Fig. 6: eine zwischen den Fensterteilen vorgesehene Dichtung in perspektivischer Ansicht.

Die Erfindung ist an einem im Bauwesen einsetzbaren Industrieschlepper 10 vorgesehen, der vordere lenkbare Räder 12 und rückwärtige antreibbare Räder 14 aufweist. Frontseitig ist an den Schlepper 10 eine Ladeschaufel 16 und rückwärtig ein Tieflöffel 18 angeschlossen. Bei Arbeiten mit dem Tieflöffel 18 wird der Industrieschleppper über ausfahrbare Stützen 20 stabilisiert.

Im rückwärtigen Bereich des Schleppers ist ein Fahrer- und Bedienungsstand 22 vorgesehen, der in bekannter Weise die Steuergeräte für den Tieflöffel 18 und für die Ladeschaufel 16 aufweist sowie einen ebenfalls nicht dargestellten Sitz, der bei fahrendem Industrieschlepper oder, wenn mit der Ladeschaufel 16 gearbeitet wird, nach vorne gerichtet ist und beim Arbeiten mit dem Tieflöffel 18 um 180° nach rückwärts geschwenkt werden kann. Der Fahrerstand ist von einer Fahrzeugkabine 24 umgeben. Moderne Kabinen entsprechen den Anforderungen der Umwelt und sind mit einem Überrollschutz versehen, der in die Kabine integriert ist und die Bedienungsperson bei einem eventuellen Umkippen des Schleppers sichert. Beim vorliegenden Ausführungsbeispiel ist die Fahrzeugkabine 24 mit einem über dem Sitz horizontal verlaufenden Dach 26, mit einem rechten und einem linken rückwärtigen Pfosten 28 und 30 und mit zwei frontseitigen Pfosten 32 ausgerüstet. Die vier Pfosten befinden sich jeweils an den Ecken des Daches und bilden den Überrollschutz für den Fahrer oder die Bedienungsperson.

Die Seiten derartiger Kabinen sind verglast, wobei die Glasfenster so groß wie möglich ausgebildet werden, um die Sicht für die Bedienungsperson zu optimieren. Ein rückwärtiges Fenster 34 überspannt die hintere Breite und erstreckt sich vom Kabinendach nach unten. Die Ausbildung eines solchen rückwärtigen Fensters ist im einzelnen in dem Dokument US-A-4 518 195 beschrieben. Die Fahrzeugkabine ist ferner noch mit einem frontseitigen Einstieg in Form einer Kabinentür und mit einer vorderen Windschutzscheibe versehen. Beides ist in der Zeichnung nicht dargestellt. Zwei Seitenfenster, jeweils an einer Seite der Fahrzeugkabine, sind mit 36 bezeichnet. Die Seitenfenster 36 sind identisch ausgebildet und nur das linke ist in der Zeichnung im einzelnen dargestellt. Es wird nachfolgend beschrieben.

Das Seitenfenster 36 bildet fast die ganze linke Kabinenseite. Zu ihm gehört ein Fensterrahmen 38 mit einem oberen Teil 40, unmittelbar unter dem Dach 26 der Kabine, und mit einem unteren sich im Kabinenlängsrichtung erstreckenden Teil 42, der direkt oberhalb eines Schutzbleches für das linke rückwärtige Rad 14 angeordnet ist. Die Vorderseite des Fensterrahmens 38 deckt sich mit dem vorderen Pfosten 32 und die Rückseite mit dem rückwärtigen Pfosten 30. Dabei ist der vordere Pfosten schräg nach oben und rückwärts und der rückwärtige Pfosten schräg nach oben und nach vorne verlaufend angeordnet. Für die Fahrzeugkabine ergibt sich dadurch eine trapezförmige Ausbildung.

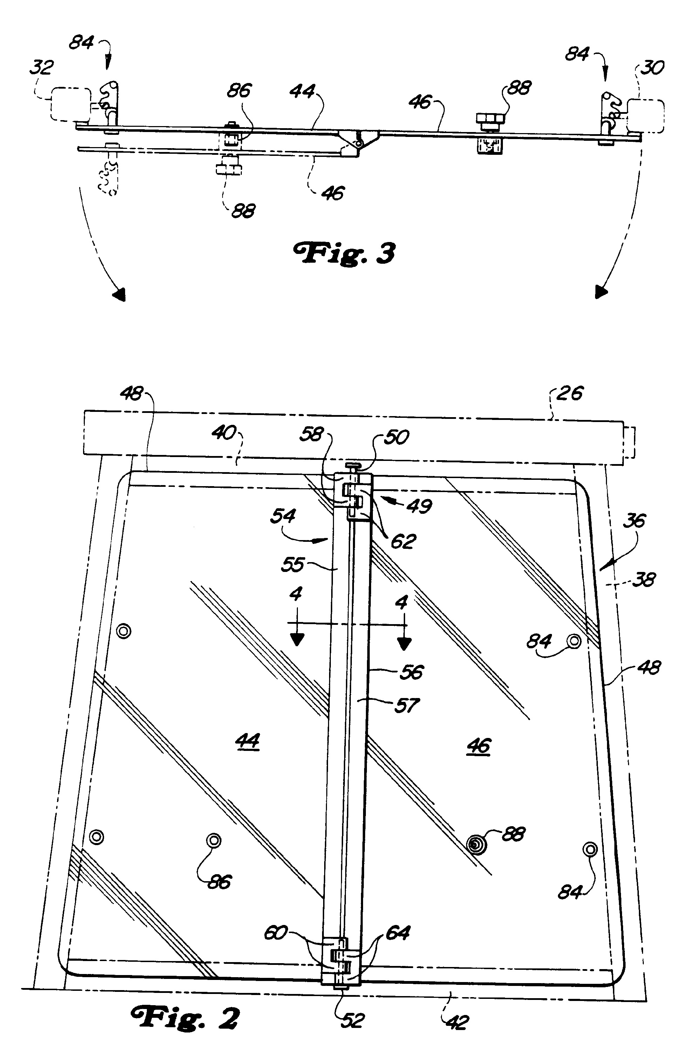

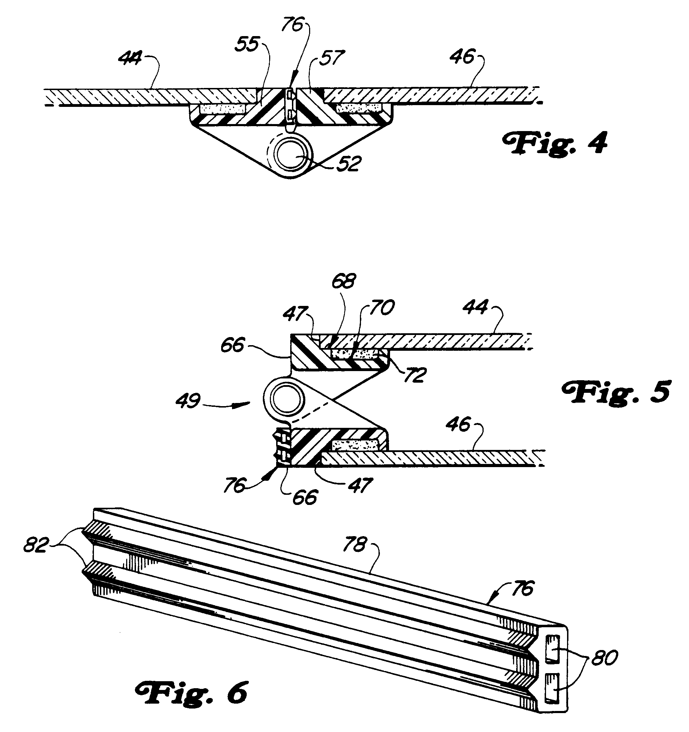

Jedes Seitenfenster 36 besteht im einzelnen aus einem vorderen Fensterteil 44 und aus einem rückwärtigen Fensterteil 46. Die beiden Fensterteile 44 und 46 sind im wesentlichen spiegelbildlich ausgebildet und weisen, wie aus Fig. 5 hervorgeht, sich gegenüberliegende und im wesentlichen vertikal verlaufende innere Kanten 47 auf. Die Kanten 47 haben zueinander Abstand und erstrecken sich über die gesamte Höhe des Seitenfensters 36. Äußere Kanten 48 bilden die seitliche äußere Begrenzung des Seitenfensters 36. Aus Fig. 2 ist zu erkennen, daß die beiden Fensterteile mit ihren oberen und untereren und mit ihren äußeren Kanten auf dem Fensterrahmen im geschlossenen Zustand anliegen. Zwischen dem Fensterrahmen und den Fensterteilen kann noch eine Dichtung vorgesehen sein.

Die beiden Fensterteile 44 und 46 sind miteinander und mit dem Fensterrahmen 38 über ein in seiner Gesamtheit mit 49 bezeichnetes Scharnier verbunden. Zu dem Scharnier 49 gehört ein oberer Schwenkzapfen 50, der mit dem oberen Teil 40 des Fensterrahmens 38 verbunden ist und sich von diesem aus gesehen nach unten erstreckt, und ein unterer Schwenkbolzen 52, der mit dem unteren Teil 42 des Fensterrahmens 38 verbunden ist und sich von diesem aus gesehen nach oben erstreckt. Zu dem Scharnier 49 gehört des weiteren ein vorderes Scharnierelement 54 mit einem Mittelstück 55 und ein rückwärtiges Scharnierelement 56 mit einem Mittelstück 57. Die beiden Scharnierelemente haben eine Länge, die der Höhe des Seitenfensters entspricht. Sie sind relativ schmal ausgebildet und ihre Mittelstücke liegen dicht nebeneinander in derselben Ebene. Das Mittelstück 55 des vorderen Scharnierelementes 54 ist an seinem oberen und unteren Ende mit zueinander ausgerichteten Zapfenlagern 58 und 60 versehen, die im geschlossenen Zustand des vorderen Fensterteils 44 nach außen vorspringen und damit zu den Mittelstücken einen Abstand aufweisen. Ebenso ist das Mittelstück 57 des rückwärtigen Scharnierelementes 56 an seinem oberen und unteren Ende mit zueinander ausgerichteten Zapfenlagern 62 und 64 versehen, die im geschlossenen Zustand des rückwärtigen Fensterteils 46 nach außen vorspringen und zu den Zapfenlagern 58, 60 des vorderen Schanierelementes höhenversetzt angeordnet sind. Die Zapfenlager dienen zur Aufnahme der oberen und unteren Schwenkzapfen 50 und 52, wie es in Fig. 2 dargestellt ist, und sind, wie es aus den Fig. 2 bis 5 ersichtlich ist, mit keilförmigen Befestigungsteilen versehen, mit denen sie auf den vorzugsweise aus Plastik bestehenden Mittelstücken 55 und 57 verbunden sind. Die Mittelstücke und Zapfenlager für jedes Fensterteil können aber auch einstückig ausgebildet sein.

Der Aufbau der Scharnierelemente ist am besten aus den Fig. 4 und 5 zu erkennen. Das Mittelstück 55 und 57 eines jeden Scharnierelementes 54, 56 hat eine innere Seite 66 oder Oberfläche, die im geschlossenen Zustand der beiden Fensterteile 44 und 46 sich dicht gegenüberliegen, wie es die Fig. 4 ausweist. Sie sind in dieser Stellung zueinander ausgerichtet, weisen aber zu der Längsachse der Zapfenlager oder zu der Längsachse der Schwenkzapfen einen Querabstand auf. In der in Fig. 5 gezeigten Stellung, in der ein Fensterteil aufgeklappt ist, haben die Seiten 66 der Mittelstücke zu der Längsmittelebene der Zapfenlager einen kleinen Versatz. In jedes Mittelstück 55, 57 ist eine sich über ihre gesamte Länge erstreckende Ausnehmung 68 eingearbeitet, die an den den Zapfenlagern abgelegenen Enden der Mittelstücke offen ist. Sie dienen zur Aufnahme der innen liegenden Kanten der Fensterteile und haben eine Tiefe, die der Stärke der Fensterteile entspricht. Damit liegen in der in Fig. 4 wiedergegebenen Stellung, in der die Fensterteile geschlossen sind, die Innenseiten eines jeden Fensterteils und die Innenseiten der Mittelstücke in einer Ebene. Unterhalb der Ausnehmungen 68 befinden sich in den Mittelstücken 55, 57 noch Taschen 70 zur Aufnahme eines Klebemittels 72, über das die Fensterteile mit den Mittelstücken verklebt werden können. Ein entsprechendes Klebemittel ist im Handel unter der Bezeichnung "Essex No. 573-02" erhältlich. Die Taschen erstrecken sich über die gesamte Länge der Mittelstücke und dienen, wenn sie mit einem Klebemittel gefüllt sind, als einzige Befestigung für die Fensterteile mit dem Scharnier 49.

Auf die innenliegende Seite 66 des vorderen oder rückwärtigen Mittelstückes 55 oder 57 ist noch relativ schmale Dichtung 76 aufgeklebt, deren Länge der Länge der Mittelstücke entspricht. Die Dichtung 76 besteht, wie aus Fig. 6 zu ersehen ist, aus einem Grundkörper 78 mit rechteckigem Querschnitt, in dem Hohlräume 80 vorgesehen sind. Die Hohlräume 80 durchziehen die Dichtung auf ihrer gesamten Länge. Damit ist die Dichtung 76 kompressibel. Mit der ebenen Grundseite wird die Dichtung mit dem einen Mittelstück verklebt, und an der der Klebeseite abgelegenen Seite sind noch zwei sich über die gesamte Länge der Dichtung erstreckende Lippen 82 vorgesehen, die sich im geschlossenen Zustand der Fensterteile fest gegen das andere Mittelstück anlegen, wie es aus Fig. 4 hervorgeht. Die Zuordnung der Mittelstücke 55, 57 zu der Schwenkachse des Scharniers 49 ist derart, das die innen liegenden Seiten 66 der beiden Mittelstücke in der geschlossenen Stellung der Fensterteile 44, 46 zueinander parallel verlaufen und nur einen geringen gegenseitigen Abstand haben. Dieser Abstand ist kleiner als die Gesamtstärke der Dichtung 76, so daß, wenn eins der Fensterteile 46 oder 44 aus seiner in Fig. 5 gezeigten Stellung in die in Fig. 4 gezeigte Stellung verschwenkt wird, die Dichtung zusammengepresst wird. Der Spalt zwischen den beiden Mittelstücken 55 und 57 ist damit betriebsicher gegen das Eindringen von Fremdkörpern, wie Staub oder Wasser, geschützt. Die Dichtung dient auch der Geräuschdämmung in der Kabine.

Sowohl der vordere Fensterteil 44 als auch der rückwärtige Fensterteil 46 können den Wünschen der Bedienungsperson entsprechend aus ihrer geschlossenen Stellung in eine geöffnete Stellung um 180° nach hinten oder vorne verklappt werden. Zwei Riegel 84 sind an den rückwärtigen Kanten des rückwärtigen Fensterteils 46 vorgesehen. Sie dienen zur Befestigung des rückwärtigen Fensterteils 46 an den Fensterrahmen 38. In ähnlicher Weise sind im vorderen Bereich des vorderen Fensterteils 44 ebenfalls zwei Riegel 84 zur Befestigung dieses Fensterteils 44 mit der vorderen Seite des Fensterrahmens vorgesehen. Der genaue Aufbau der Riegel 84 ist in dem Dokument US-A-4 758 032 beschrieben.

In der in Fig. 4 gezeigten und geschlossenen Stellung der beiden Fensterteile 44 und 46 sind alle Riegel verriegelt. Soll ein Fensterteil geöffnet werden, so werden die zugehörigen Riegel entriegelt und der Fensterteil um 180° verschwenkt, bis er dem anderen Fensterteil, der verriegelt bleibt, gegenüberliegt. In dieser in Fig. 5 gezeigten Stellung verlaufen beide Fensterteile zueinander parallel und werden gegeneinander festgestellt. Hierzu ist an dem einen Fensterteil, beispielweise dem vorderen, eine mit Innengewinde versehene Buchse 86 vorgesehen und an dem anderen Fensterteil ein Gewindeknauf 88. Der Gewindeteil des Knaufes 88 kann in die Buchse eingeschraubt werden, wenn sich eins der Fensterteile in seiner geöffneten Stellung befindet. Buchse und Knauf können sich durch ihre zugehörigen Fensterteile erstrecken, um vom Inneren der Kabine aus betätigt werden zu können.

Aus vorstehender Beschreibung geht hervor, daß sowohl die vordere Hälfte des Seitenfensters als auch die rückwärtige Hälfte des Seitenfensters wahlweise geöffnet werden kann. Das Öffnen beider Hälften zu gleicher Zeit ist denkbar. Die schwenkbare Anordnung der beiden Fensterteile ist einfach und auf engstem Raum, so daß die Sicht der Bedienungsperson nicht oder nur unwesentlich beeinträchtigt wird. Die Mittelstücke sind relativ schmal und stehen kaum merklich in der geschlossenen Stellung nach außen vor. Sie beeinträchtigen die Formschönheit der Kabine nicht.

## Patentansprüche

1. Fahrzeugkabine, insbesondere für Industrieschlepper, mit einem eine Fensteröffnung umgebenden Fensterrahmen und einem oberen und einem unteren vertikal zueinander ausgerichteten Schwenkzapfen (50, 52), auf denen ein vorderes und ein rückwärtiges Fensterteil (44, 46) aufnehmende Scharnierelemente (54, 56) derart schwenkbar angeordnet sind, daß der vordere Fensterteil (44) aus seiner geschlossenen Stellung nach rückwärts und der rückwärtige Fensterteil (46) aus seiner geschlossenen Stellung nach vorwärts gegen den jeweils sich in seiner geschlossenen Stellung befindlichen anderen Fensterteil klappbar sind, dadurch gekennzeichnet, daß die Scharnierelemente (54, 56) mit inneren im wesentlichen vertikal verlaufenden Seiten (66) versehen sind, die zu der Längsachse der Schwenkzapfen (50 52) versetzt sind und zu dieser parallel verlaufen, daß eine vertikal verlaufende Seite (66) mit einer zusammenpressbaren elastischen Dichtung (76) versehen ist, die im geschlossenen Zustand beider Fensterteile (44, 46) durch die vertikal verlaufende Seite (66) des anderen Scharnierelementes (54, 56) zusammengepresst ist, und daß die Scharnierelemente (54, 56) seitlich offene und sich über ihre gesamte Länge zwischen den oberen und unteren Teilen (40, 42) des Fensterrahmens (38) erstreckende Ausnehmungen (68) aufweisen, in denen die Fensterteile (44, 46) mit ihren innen liegenden vertikal verlaufenden Kanten befestigt sind.

2. Fahrzeugkabine nach Anspruch 1, dadurch gekennzeichnet, daß die Schwenkzapfen (50, 52) an oberen und unteren Teilen (40, 42) des Fensterrahmens (38) angeordnet sind.

3. Fahrzeugkabine nach Anspruch 1, dadurch gekennzeichnet, daß die innen liegenden vertikal verlaufenden Kanten der Fensterteile (44, 46) mit den Ausnehmungen (68) der Scharnierelemente (54, 56) verklebt sind.

4. Fahrzeugkabine nach Anspruch 2, dadurch gekennzeichnet, daß sich der obere Schwenkzapfen (50) von dem oberen Teil (40) des Fensterrahmens (38) vertikal nach unten und der untere Schwenkzapfen (52) sich von dem unteren Teil (42) des Fensterrahmens (38) vertikal nach oben erstreckt.

5. Fahrzeugkabine nach einem oder mehreren der vorherigen Ansprüche, dadurch gekennzeichnet, daß die Dichtung (76) eine Breite aufweist, die der Breite der inneren Seite (66) des einen Scharnierelementes (54 bzw. 56) entspricht, mit der sie verbunden ist, und mit zwei vertikal verlaufenden Lippen (82) versehen ist, die im geschlossenen Zustand der beiden Fensterteile (44, 46) gegen die innere Seite (66) des anderen Scharnierelementes (56 bzw. 54) anliegt.

6. Fahrzeugkabine nach einem oder mehreren der vorherigen Ansprüche, dadurch gekennzeichnet, daß die im geschlossenen Zustand der beiden Fensterteile (44, 46) sich gegenüberliegenden Seiten (66) der beiden Scharnierelemente (54, 56) einen gegenseitigen Abstand aufweisen, der kleiner ist als die Stärke der Dichtung (76) in ihren unkomprimierten Zustand.

7. Fahrzeugkabine nach einem oder mehreren der vorherigen Ansprüche, dadurch gekennzeichnet, daß die Scharnierelemente (54, 56) flache Innenseiten aufweisen, die im geschlossenen Zustand der beiden Fensterteile (44, 46) in der gleichen Ebene wie die Innenseiten der Fensterteile (44, 46) liegen.

8. Fahrzeugkabine nach einem oder mehreren der vorherigen Ansprüche, dadurch gekennzeichnet, daß die Schanierelemente (54, 56) im geschlossenen Zustand der beiden Fensterteile (44, 46) eine Gesamtbreite aufweisen, die kleiner ist als die zehnfache Fensterscheibenstärke.

## Claims

1. A vehicle cab, particularly for an industrial tractor, with a window frame surrounding a window opening and an upper and a lower pivot pin (50, 52) vertically aligned with one another, on which hinge elements (54, 56) receiving a front and a rear window part (44, 46) are pivotally arranged, so that the front window part (44) can be swung to the rear out of its closed position and the rear window part (46) can be swung forwards out of its closed position, in each case against the respective other window part in its closed position, characterized in that the hinge elements (54, 56) are provided with inner, substantially vertical sides (66) which are offset from the longitudinal axis of the pivot pins (50, 52) and run parallel thereto, in that one vertically extending side (66) is provided with a compressible elastic seal (76), which is compressed in the closed state of the two window parts (44, 46) by the vertically extending side (66) of the other hinge element (54, 56), and in that the hinge elements (54, 56) have laterally open recesses (68) extending over the whole length between the upper and lower parts (40, 42) of the window frame (38), in which the window parts (44, 46) are fixed by their inner, vertically extending edges.

2. A vehicle cab according to claim 1, characterized in that the pivot pins (50, 52) are arranged on the upper and lower parts (40, 42) of the window frame (38).

3. A vehicle cab according to claim 1, characterized in that the inner, vertically extending edges of the window parts (44, 46) are bonded to the recesses (68) in the hinge elements (54, 56).

4. A vehicle cab according to claim 2, characterized in that the upper pivot pin (50) extends vertically downwardly from the upper part (40) of the window frame (38) and the lower pivot pin (52) extends vertically upwards from the lower part (42) of the window frame (38).

5. A vehicle cab according to one or more of the preceding claims, characterized in that the seal (76) has a width corresponding to the width of the inner side (66) of the hinge element (54 or 56) to which it is attached and is provided with two vertically extending lips (82) which bear in the closed state of the two window parts (44, 46) against the inner side (66) of the other hinge element (56 or 54).

6. A vehicle cab according to one or more of the preceding claims, characterized in that the mutually opposite sides (66) of the two hinge elements (54, 56) have a mutual spacing in the closed state of the two window parts (44, 46) which is smaller than the thickness of the seal (76) in its un-compressed state.

7. A vehicle cab according to one or more of the preceding claims, characterized in that the hinge elements (54, 56) have flat insides which lie in the same plane as the insides of the window parts (44, 46) in the closed state of the two window parts (44, 46).

8. A vehicle cab according to one or more of the preceding claims, characterized in that the hinge elements (54, 56) have a total width in the closed state of the two window parts (44, 46) which is smaller than ten times the window pane thickness.

## Revendications

1. Cabine de véhicule, en particulier pour tracteurs industriels, avec un cadre de fenêtre entourant une ouverture de fenêtre, et avec un pivot supérieur et un pivot inférieur (50, 52), verticalement alignés, sur lesquels des éléments de charnière (54, 56), recevant une partie de fenêtre avant et une partie de fenêtre arrière (44, 46), sont montés à pivotement de telle sorte que les parties de fenêtre avant et arrière (44, 46) peuvent être, à partir de leur position fermée, rabattues respectivement vers l'arrière et vers l'avant contre l'autre partie de fenêtre se trouvant dans sa position fermée, **caractérisée** en ce que les éléments de charnière (54, 56) sont pourvus de côtés intérieurs (66) s'étendant sensiblement verticalement, qui sont décalés par rapport à l'axe longitudinal des pivots (50, 52) et s'étendent parallèlement à cet axe, en ce qu'un côté s'étendant verticalement (66) est pourvu d'une garniture d'étanchéité élastique (76) compressible qui, à l'état fermé des deux parties de fenêtre (44, 46), est comprimée par le côté s'étendant verticalement (66) de l'autre élément de charnière (54, 56), et en ce que les éléments de charnière (54, 56) présentent des évidements (68), latéralement ouverts et s'étendant sur toute la longueur desdits éléments entre les parties supérieure et inférieure (40, 42) du cadre de fenêtre (38), évidements dans lesquels les parties de fenêtre (44, 46) sont fixées par leurs bords intérieurs s'étendant verticalement.

2. Cabine de véhicule selon la revendication 1, **caractérisée** en ce que les pivots (50, 52) sont disposés sur les parties supérieure et inférieure (40, 42) du cadre de fenêtre (38).

3. Cabine de véhicule selon la revendication 1, **caractérisée** en ce que les bords intérieurs s'étendant verticalement des parties de fenêtre (44, 46) sont assemblés par collage aux évidements (68) des éléments de charnière (54, 56).

4. Cabine de véhicule selon la revendication 2, **caractérisée** en ce que le pivot supérieur (50) s'étend verticalement vers le bas à partir de la partie supérieure (40) du cadre de fenêtre (38) et le pivot inférieur (52) s'étend verticalement vers le haut à partir de la partie inférieure (42) du cadre de fenêtre (38).

5. Cabine de véhicule selon l'une quelconque des revendications précédentes, **caractérisée** en ce que la garniture d'étanchéité (76) présente une largeur qui correspond à la largeur du côté intérieur (66) d'un des éléments de charnière (54 ou 56), auquel elle est assemblée, et est pourvue de deux lèvres (82) s'étendant verticalement qui, à l'état fermé des deux parties de fenêtre (44, 46), s'appliquent contre le côté intérieur (66) de l'autre élément de charnière (56 ou 54).

6. Cabine de véhicule selon l'une quelconque des revendications précédentes, **caractérisée** en ce que les côtés (66) des deux éléments de charnière (54, 56), côtés qui se font face à l'état fermé des deux parties de fenêtre (44, 46), présentent une distance mutuelle qui est inférieure à l'épaisseur de la garniture d'étanchéité (76) dans son état non comprimé.

7. Cabine de véhicule selon l'une quelconque des revendications précédentes, **caractérisée** en ce que les éléments de charnière (54, 56) présentent des côtés intérieurs plats qui, à l'état fermé des deux parties de fenêtre (44, 46), se trouvent dans le même plan que les côtés intérieurs des parties de fenêtre (44, 46).

8. Cabine de véhicule selon l'une quelconque des revendications précédentes, **caractérisée** en ce que les éléments de charnière (54, 56) présentent, à l'état fermé des deux parties de fenêtre (44, 46), une largeur totale qui est inférieure à dix fois l'épaisseur des vitres de la fenêtre.
